# EUROPÄISCHE PATENTSCHRIFT

(11) **EP 1 305 133 B1**
(45) Veröffentlichungstag und Bekanntmachung des Hinweises auf die Patenterteilung: **06.05.2004**
(21) Anmeldenummer: 01957728.7
(22) Anmeldetag: 21.07.2001
(51) Int. Cl.: B23P 9/00, F01D 5/28

(54) **VERFAHREN UND VORRICHTUNG ZUM PLASMAIMPULSVERFESTIGEN EINES METALLISCHEN BAUTEILS**
METHOD AND DEVICE FOR HARDENING A METAL COMPONENT BY PLASMA PULSE TECHNOLOGY
PROCEDE ET DISPOSITIF DE CONSOLIDATION PAR IMPULSIONS DE PLASMA D'UN COMPOSANT METALLIQUE

(30) Priorität: 29.07.2000 DE 10037053
(43) Veröffentlichungstag der Anmeldung: 02.05.2003
(73) Patentinhaber: MTU Aero Engines GmbH, 80995 München (DE)
(72) Erfinder: BAYER, Erwin, D-85221 Dachau (DE); WAGNER, Henri, 70599 Stuttgart (DE)
(74) Vertreter: Lindner-Vogt, Karin, Dipl.-Phys.
(86) Internationale Anmeldenummer: PCT/DE2001/002777
(87) Internationale Veröffentlichungsnummer: WO 2002/009905

(56) Entgegenhaltungen:
- EP-A- 0 933 438
- US-A- 4 426 867
- US-A- 5 525 429
- US-A- 5 846 057
- PATENT ABSTRACTS OF JAPAN vol. 007, no. 007 (C-144), 12. Januar 1983 (1983-01-12) & JP 57 164921 A (HITACHI SEISAKUSHO KK), 9. Oktober 1982 (1982-10-09)

## Beschreibung

Die Erfindung betrifft ein Verfahren und eine Vorrichtung zum Plasmaimpulsverfestigen eines metallischen Bauteils, siehe, zum Beispiel JP 57 164 921.

Bauteile von Gasturbinen werden durch Schwingungen belastet und sind mechanischem oder strömungstechnischem bzw. erosivem Verschleiß ausgesetzt. Zur Verlängerung der Lebensdauer werden durch Kugelstrahlen oder Laserimpulsverfestigen Druckeigenspannungen in die Bauteile eingebracht. Das Kugelstrahlen hat den Nachteil, dass die Oberfläche des Bauteils infolge der Kugeleinschläge im Hinblick auf die Rauhigkeit verschlechtert wird. Nachteilig beim Laserimpulsverfestigen ist neben dem sehr geringen Wirkungsgrad des Lasers der lokal auf den Fokusbereich des Lasers eingeschränkte, punktuelle Einwirkbereich des Laserimpulses auf der zu verfestigenden Bauteiloberfläche.

Die Aufgabe der Erfindung besteht darin, ein Verfahren zum Verfestigen eines metallischen Bauteils bereitzustellen, das nicht lediglich punktuell auf die zu verfestigende Oberfläche einwirkt und die Rauhigkeit der Oberfläche nicht verschlechtert. Zudem soll eine entsprechende Vorrichtung zum Verfestigen eines metallischen Bauteils geschaffen werden.

Die Lösung ist im Hinblick auf das Verfahren erfindungsgemäß durch folgende Schritte gekennzeichnet: Bereitstellen eines metallischen Bauteils, Beschichten eines 0-berflächenabschnitts des metallischen Bauteils mit einem sublimierbaren Material, Beaufschlagen des Oberflächenabschnitts mit einem gepulsten Plasmastrahl so, dass das Material sublimiert und dadurch eine Stoßwelle in das Bauteil eingekoppelt wird zur Bildung von bleibenden Druckspannungen in einem sich von dem Oberflächenabschnitt bis in das Bauteil hinein erstreckenden Bereich.

Bei dem Verfahren erfolgt eine Verfestigung des Bauteils an der Oberfläche und den oberflächennahen Bereichen ohne Vergrößerung der Bauteilrauhigkeit, die insbesondere bei Bauteilen von Gasturbinen aufgrund von Aerodynamik- und Festigkeitsaspekten unerwünscht ist. Die Bauteiloberfläche wird beim Plasmaimpulsverfestigen nicht beschädigt. Zudem wirkt der aus einem Gemisch aus Elektronen und positiv geladenen Atomkernen (Ionen) bestehende und somit Materie aufweisende Plasmastrahl an der Oberfläche des Bauteils auf eine im zum Vergleich zum Fokusbereich eines Laserstrahls deutlich größere Fläche, wodurch das Verfahren schneller und wirtschaftlicher durchgeführt werden kann. Das Material, mit dem die zu verfestigende Oberfläche des Bauteils beschichtet ist, sublimiert in einem Hochenergie-Kurzpuls infolge der Umsetzung der thermischen und kinematischen Energie des Plasmaimpulses. Durch die Einkopplung dieses Sublimations-Detonationsstoßes in Form einer Stoßwelle in das Bauteil wird dieses an der Oberfläche und in oberflächennahen Bereichen bis zu Eindringtiefen von etwa 2 mm infolge von Gefügeänderungen verfestigt bzw. gehärtet

Im Unterschied zum reinen Lichtstrahl des Laserimpulses ist der Plasmastrahl ein gerichteter Materiestrahl, dessen Energie sich aus einem kinetischen und einem thermischen Anteil zusammensetzt. Diese Anteile betragen üblicherweise jeweils etwa 50%. Der kinetische Energieanteil bewirkt das Eindringen des Plasmastrahls in die Schicht aus sublimierbarem Material hinein und garantiert eine hocheffiziente Energie- bzw. Leistungseinspeisung. Die Sublimation dieser Schicht und die daraus resultierende Stoßwelle werden dann durch die Umsetzung der Gesamtenergie des Plasmastrahls erzeugt. Durch den kinetischen Effekt, d.h. das Abbremsen der extrem hoch beschleunigten Teilchen des Plasmastrahls, wird ein hoher Druck auf die Schicht aus sublimierbarem Material und das Bauteil selbst ausgeübt, der ein frühzeitiges Entweichen der Sublimationsgase verhindert und eine bessere Einkopplung der Stoßwelle in das Bauteil ermöglicht. Die Verwendung sog. Deckschichten oder Nebel, die bei Laserimpulsen erforderlich ist, wird nicht benötigt.

Bei speziellen Plasmastrahlen ist das Einbringen von bleibenden Druckspannungen in einen sich von dem Oberflächenabschnitt bis in das Bauteil hinein erstreckenden Bereich ausschließlich durch Nutzung des kinetischen Effekts möglich.

Aufgrund der bleibenden Druckspannungen können die Wandstärken schwingungsbelasteter Bauteile und somit deren Gewicht reduziert werden. Die in den Körper dabei eintretende Stoßwelle wird an der Oberfläche des Bauteils durch Einwirkung des gepulsten Plasmastrahls auf das sublimierbare Material und der damit verbundenen detonationsartigen Sublimation erzeugt.

Mit dem Verfahren können Verdichterbauteile, wie Schaufeln oder Scheiben, aus Ti-Basislegierungen ebenso wie Bauteile aus Fe- oder Ni- oder Co-Basislegierungen in oberflächennahen Bereichen verfestigt und gehärtet werden.

Durch den plasmaimpulsverfestigten Bereich läßt sich die Dauerfestigkeit schwingungsbelasteter Bauteile aufgrund der Bildung von bleibenden Druckspannungen in den oberflächennahen Bereichen deutlich erhöhen. Das Einbringen von Druckspannungen in das Bauteil mittels Plasmaimpulsverfestigen wirkt sich auch auf die Lebensdauer von schwingungsbelasteten Schaufeln und Scheiben von Verdichtern oder Turbinen von Gasturbinen positiv aus. Das Plasmaimpulsverfestigen der oberflächennahen Bereiche zeigt zudem lebensdauererhöhende, positive Effekte bei der Reibkorrosion bzw. dem sog. "Fretting", die/das an den Kontaktstellen zwischen Schaufelfüßen und Aufnahmenuten in Scheiben auftritt.

Das sublimierbare Material ist bevorzugt organisch, z.B. thermoplastischer Kunststoff wie PVC, PE, PP, und wirkt als energieübertragendes Medium, durch das der beim Auftreffen des gepulsten Plasmastrahls entstehende Sublimations-Detonationsstoß als Stoßwelle in das Bauteil eingekoppelt wird.

Der Oberflächenabschnitt des Bauteils wird mit dem Plasmastrahl flächig beaufschlagt, wobei der Plasmastrahl auf eine Fläche von etwa 10 cm² und größer pro Plasmaimpuls einwirken kann. Dieser Wert kann durch die Leistungsdaten und die Geometrie der eingesetzten Plasmaimpulsquelle variiert werden und wird der Geometrie des zu verfestigenden Oberflächenabschnitts angepasst.

Infolge des hocheffizienten Energie- und Impulseintrags in die Schicht aus sublimierbarem Material kann das Bauteil bis zu Eindringtiefen von etwa 2 mm durch Gefügeänderungen infolge der Stoßwellen verfestigt bzw. gehärtet werden.

Der Oberflächenabschnitt kann mit einem Plasmastrahl mit einer Geschwindigkeit von wenigstens etwa 150 km/s beaufschlagt werden, damit die Teilchen des Plasmastrahls in die Schicht aus sublimierbarem Material eindringen und nicht abprallen.

Der gepulste Plasmastrahl kann auf Basis einer gepulsten Hochstrom-Bogenentladung erzeugt werden, wobei das durch den Lichtbogen ionisierte Arbeitsgas, wie He oder Ar, in Form des Plasmastrahls detonationsartig aus einer Plasmaimpulsquelle austritt.

Das Verfahren wird bevorzugt im Vakuum im Bereich von 10⁻⁷ bar durchgeführt, um einen Energieverlust des Plasmastrahls und somit eine Verringerung des Wirkungsgrads zu vermeiden.

Das Verfahren zum Plasmaimpulsverfestigen läßt sich auch wirksam bei bereits im Betrieb in Form von Rissen oder Kerben geschädigten Bauteilen von Gasturbinen od.dgl. einsetzen. Bei derartigen Bauteilen wird ein im Bereich der Schädigung liegender Oberflächenabschnitt mit dem Plasmastrahl unter Einbringung bleibender Druckspannungen im Bauteil beaufschlagt, wodurch ein weiterer Rißfortschritt verhindert und die Restlebensdauer dieses Bauteils auf das Niveau von Neuteilen erhöht werden kann.

Die Lösung ist im Hinblick auf die Vorrichtung erfindungsgemäß gekennzeichnet durch eine Plasmaimpulsquelle mit einem Volumen zur Aufnahme von Arbeitsgas und einer zu einem metallischen Substrat gerichteten Düse, Halte- und Positioniereinrichtungen für die Plasmaimpulsquelle und das Substrat, eine Einrichtung zum Beschichten des Substrats mit einem sublimierbaren Material, eine Einrichtung zur diskontinuierlichen Zufuhr von Arbeitsgas in das Volumen und eine Einrichtung zur Einkopplung extrem hoher Leistung in das Plasmagas zur Erzeugung eines detonationsartig austretenden, gepulsten Plasmastrahls. Hierbei werden die Teilchen des Plasmastrahls auf Überschallgeschwindigkeit beschleunigt.

Um die extrem hohe Leistungsbringung in einer Größenordnung von 10 GW für den detonationsartigen Austritt des Plasmas aus der Plasmaimpulsquelle zu erzielen, erfolgt die Energieeinkopplung bevorzugt mittels Hochstrom-Bogenentladung.

Die Einrichtung zur diskontinuierlichen Zufuhr von Arbeitsgas in das Volumen umfaßt bevorzugt wenigstens ein Ventil, das so gesteuert ist, dass unmittelbar nach dem detonationsartigen Austreten von Plasmagas neues Arbeitsgas zugeführt wird.

Der gepulste Plasmastrahl kann in Abhängigkeit vom Kondensatorladegerät und dem Ventil mit Frequenzen im Bereich von 1 - 10 Hz austreten.

Weitere Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: in perspektivischer Darstellung einer Schaufel einer Gasturbine, deren Oberfläche wenigstens abschnittsweise nach dem erfindungsgemäßen Verfahren plasmaimpulsverfestigt werden kann,
- Fig. 2: in perspektivischer Darstellung einen Rotor einer Gasturbine, der im wesentlichen aus einer Scheibe mit einer Nabe und Schaufeln besteht, und
- Fig. 3: in schematischer Darstellung eine Vorrichtung mit einer Plasmaimpulsquelle.

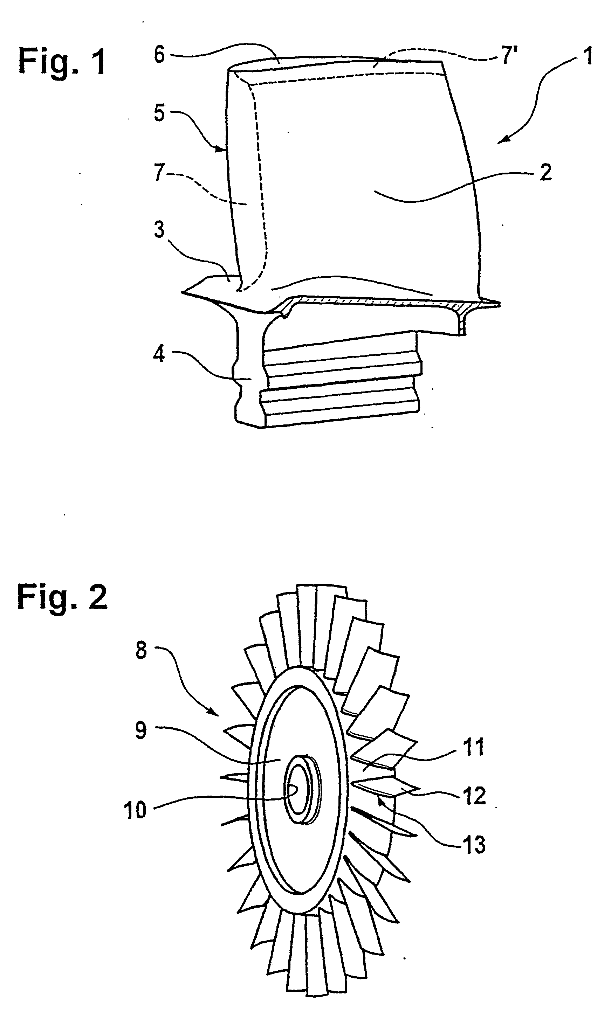

Fig. 1 zeigt eine im ganzen mit 1 bezeichnete Schaufel einer Gasturbine, deren Oberflächen bzw. oberflächennahen Bereiche wenigstens abschnittsweise durch Plasmaimpulse unter Einbringung von bleibenden Druckspannungen verfestigt und gehärtet wird. Das Verfahren zum Plasmaimpulsverfestigen lässt sich sowohl für Schaufeln 1 von Verdichtem als auch von Turbinen anwenden. Beim Betrieb einer Gasturbine wird die Schaufel 1 beim Übergang von einer inneren Plattform 3 zum Schaufelblatt 2 bzw. zum Schaufelfuß 4 durch Schwingungen besonders belastet. Zusätzlich wird der Schaufelfuß 4 noch durch Reibkorrosion bzw. "Fretting" belastet.

Des weiteren sind die Oberflächen des Gasturbinenbauteils im Strömungskanal strömungstechnischem Verschleiß bzw. Erosion durch Partikel, Verunreinigungen od.dgl. ausgesetzt, wobei das größte Beschädigungspotential im Bereich einer Vorderkante 5 der Schaufel 1 liegt. Die am Gehäuse der Gasturbine anstreifenden Bereiche der Schaufeln 1, wie z.B. Schaufelspitzen 6 oder nicht dargestellte Dichtspitzen bzw. Dichtfins an Schaufeln mit Deckband, sind mechanischem Verschleiß ausgesetzt und können in gleicher Weise im Sinne einer Panzerung durch Plasmaimpulsverfestigen behandelt werden.

Beispielhaft ist im Bereich der Schaufelvorderkante 5 der Schaufel 1 ein Oberflächenabschnitt 7 gestrichelt angedeutet, der gemäß einem Ausführungsbeispiel des erfindungsgemäßen Verfahrens plasmaimpulsverfestigt werden kann, um in einem sich von dem Oberflächenabschnitt 7 bis ins Bauteil 1 hinein erstreckenden Bereich bleibende Druckspannungen einzubringen und so das Bauteil 1 zu verfestigen. Ein im Bereich der Schaufelspitze 6 liegender, ebenfalls gestrichelt angedeuteter, weiterer Oberflächenabschnitt 7' kann gemäß einem Ausführungsbeispiel des erfindungsgemäßen Verfahrens plasmaimpulsverfestigt werden, um die Schaufel dort mechanisch zu panzern und gegen den Verschleiß beim Anstreifen zu schützen.

Derartige lösbare Schaufeln 1 werden an Scheiben mit zahlreichen Längsnuten oder einer umlaufenden Umfangsnut formschlüssig befestigt. Ebenso wie der Schaufelfuß 4 der Schaufel 1 sind derartige, nicht dargestellte Nuten von Scheiben spannungskritische, bruchgefährdete Bereiche, die zur Erhöhung der Lebensdauer plasmaimpulsverfestigt werden können.

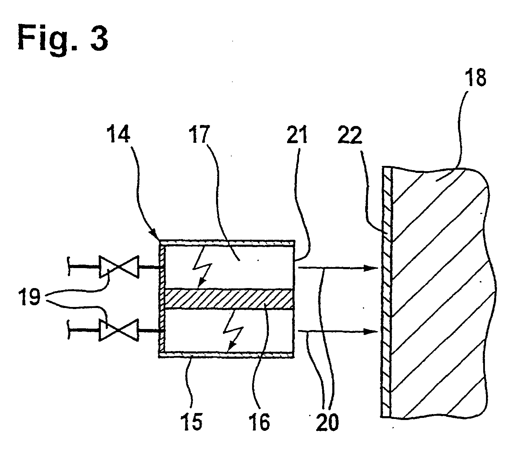

Bei dem Verfahren zum Plasmaimpulsverfestigen wird die Schaufel 1, wie in Fig. 3 schematisch für ein Bauteil 18 gezeigt, in einer Halte- und Positioniereinrichtung so fixiert, dass eine Plasmaimpulsquelle 14 den zu verfestigenden Oberflächenabschnitt 7,7' mit einem gepulsten Plasmastrahl 20 beaufschlagen kann. Zuvor wird der Oberflächenabschnitt 7,7' mit einer Schicht 22 aus sublimierbarem Material, wie z.B. einem thermoplastischen Kunststoff, wie PVC, in einer geeigneten Dicke beschichtet. Die Dicke der Schicht 22 hängt unter anderem von dem Material des Bauteils 1,8,18 ab.

Anschließend wird einem Volumen 17 der Plasmaimpulsquelle 14 ein Arbeitsgas, z.B. He, H₂ oder Ar, zugeführt, welchem mittels einer Einrichtung zur Einkopplung extrem hoher Leistung im Bereich von 10 GW, wie einer Hochstrom-Bogenentladung 15,16, in kürzester Zeit Leistung zugeführt wird. Es bildet sich ein detonationsartig aus einer Düse 21 der Plasmaimpulsquelle 14 austretender und in das sublimierbare Material 22, mit dem der Oberflächenabschnitt 7,7' beschichtet ist, eindringender, gepulster Plasmastrahl 20, durch dessen thermische und kinematische Anteile aufweisende Gesamtenergie das Material 22 in einem Hochenergie-Kurzpuls sublimiert. Dieser Sublimations-Detonationsstoß wird infolge des hohen Drucks auf die Schicht durch das Abbremsen der extrem hoch beschleunigten Teilchen des Plasmastrahls 20 unmittelbar in das Bauteil 1 eingekoppelt und führt zu einer Stoßwelle, durch welche das Bauteil bis zu Eindringtiefen von etwa 2 mm infolge von Gefügeänderungen verfestigt und gehärtet wird. Es treten neben einer Initialstoßwelle reflektierende Stoßwellen auf.

Aufgrund der großen Einwirkfläche des Plasmastrahls 20 auf dem mit sublimierbarem Material 22 beschichteten Oberflächenabschnitt 7,7' von etwa 10 cm² oder größer erweist sich das Plasmaimpulsverfestigen als äußerst wirtschaftliches Verfahren. Durch geeignete Wahl der Halte- und Positioniereinrichtungen für die Plasmaimpulsquelle 14 und das Substrat 1,18 lassen sich auch schmale oder schwer zugängliche Oberflächenabschnitte 7,7' plasmaimpulsverfestigen.

In Fig. 2 ist ein im ganzen mit 8 bezeichneter, integral beschaufeltere Rotor dargestellt, der im wesentlichen aus einer Scheibe 9 mit einer Nabe 10 und einer Umfangsfläche 11 sowie sich im wesentlichen radial erstreckenden Schaufeln 12 besteht. Die Schaufeln 12 eines integral beschaufelten Rotors 8 sind neben den im Zusammenhang mit der in Fig. 1 dargestellten Schaufel 1 beschriebenen, kritischen Bereichen insbesondere im Übergangbereich vom Schaufelblatt zur Umfangsfläche 11 der Scheibe 9 dynamisch beansprucht. Bei der Scheibe 9 ist der Lochbereich der Nabe 10 infolge der hohen Zugspannungen durch die Fliehkraft besonders hoch belastet.

Die kritischen Oberflächenabschnitte des Rotors 8 im Übergangsbereich zwischen einer Schaufel 12 und der Umfangsfläche 11 der Scheibe 9 sowie Lochbereich der Nabe 10 werden im wesentlichen nach den im Zusammenhang mit der Schaufel 1 aus Fig. 1 beschriebenen Verfahrensschritten plasmaimpulsverfestigt. Auf den zu verfestigenden Oberflächenabschnitt, entsprechend 7,7' in Fig. 1, wird zunächst eine Schicht 22 aus sublimierbarem, im allgemeinen organischen Material, wie z.B. einem thermoplastischen Kunststoff, aufgebracht. Für jeden Plasmastrahl 20 wird einer mit ihrer Düse 21 auf den zu verfestigenden Oberflächenabschnitt gerichteten Plasimpulsquelle 14 ein Arbeitsgas, wie Ar, zugeführt, dem mittels einer Einrichtung 15,16, wie einer Hochstrom-Bogenentladung, extrem hohe Leistung zur Erzeugung des aus Elektronen und positiv geladenen Atomkernen (Ionen) bestehenden und somit Materie aufweisenden Plasmastrahls 20 zugeführt wird. Die Plasmaimpulsquelle 14 arbeitet mit einer Frequenz im Bereich von 1 - 10 Hz, so dass der Plasmastrahl 20 detonationsartig aus der Plasmaimpulsquelle 14 austritt und auf die Schicht aus sublimierbarem Material 22 auftrifft und in sie eindringt.

Die Schicht aus sublimierbarem Material 22 dient als energieübertragendes Medium in der Weise, dass der aufgrund der Sublimation in einem Hochenergie-Kurzpuls erfolgende Sublimations-Detonationsstoß unmittelbar in den zu verfestigenden Bereich des Rotors 8 eingekoppelt wird und dort eine Stoßwelle ausbildet, die infolge von Gefügeänderungen den Bereich im Rotor 8 verfestigen und härten.

Durch entsprechende Wahl der Halte- und Positioniereinrichtung für die Plasmaimpulsquelle 14 und den Rotor 8 lassen sich auch innere Hohlräume, wie der hochbeanspruchte Lochbereich der Nabe 10 des Rotors 8, ohne weiteres nach den beschriebenen Verfahren plasmaimpulsverfestigen.

Bereits im Betrieb geschädigte Bauteile, wie z.B. eine in Fig. 1 gezeigte Schaufel 1 oder ein in Fig. 2 gezeigter, integral beschaufelter Rotor 8 oder drehmomentübertragende Wellen, bei denen Verschleiß in Form von Kerben, Rissen oder "Fretting" auftritt, können durch Plasmaimpulsverfestigen von Oberflächenabschnitten, die im Bereich der Schädigungen liegen, in ihrer Restlebensdauer auf das Niveau von ungeschädigten Neuteilen gebracht werden. Insbesondere bei Rissen oder Kerben wird ein Fortschreiten der Schädigung durch die beim Plasmaimpulsverfestigen in den Oberflächenabschnitt eingebrachten und sich bis zu etwa 2 mm in das Bauteil hinein erstreckenden, bleibende Druckspannungen verhindert.

Bei mit Rissen od.dgl. beschädigten Bauteilen liegt der zu verfestigende und somit mit einer Schicht aus sublimierbarem Material 22 zu versehene Oberflächenabschnitt 7,7' um diese Schädigungen herum. Durch das anschließende Beaufschlagen mit einem Plasmastrahl 20 werden durch die in das Bauteil, z.B. die Schaufel 1, eingekoppelte Stoßwelle bleibende Durckspannungen eingebracht, welche ein weiteres Rißwachstum verhindern.

Fig. 3 zeigt in vereinfachter Darstellung eine Vorrichtung zur Durchführung des Verfahrens zum Plasmaimpulsverfestigen eines metallischen Bauteils 18, die im wesentlichen aus einer im ganzen mit 14 bezeichneten Plasmaimpulsquelle auf Basis einer gepulsten Hochstrom-Bogenentladung mit variabler und auf den Anwendungsfall abzustimmender Pulsenergie, Pulbreite und Pulsfolgefrequenz besteht. Das Verfahren wird diskontinuierlich mit mehreren gepulsten Plasmastrahlen 20 durchgeführt. Sollte die Fläche des zu verfestigenden Bereichs des Bauteils 18 größer als die Einwirkfläche des Plasmastrahls 20 auf der Bauteiloberfläche sein, so wird die Plasmaimpulsquelle 14 und das Bauteil 18 während des Verfahrens zueinander verfahren, dass der gesamte, gewünschte Oberflächenabschnitt mit den gepulsten Plasmastrahlen 20 beaufschlagt werden kann.

Insbesondere bei größeren, zu verfestigenden Oberflächenabschnitten 7,7' kann zusätzlich eine sog. magnetische Düse eingesetzt werden, bei welcher der Plasmastrahl 20 zur Erzielung einer gleichförmigen Energiedichte mit einem Magnetfeld gesteuert, gelenkt bzw. geformt wird. Auf diese Weise lassen sich z.B. auch ringförmige Plasmastrahlen 20 z.B. für die Plasmaimpulsverfestigung von Scheiben erzeugen.

Die Plasmaimpulsquelle 14 umfasst zwei gekühlte Elektroden 15, 16, zwischen denen eine Bogenentladung mit extrem hoher Energiedichte erzeugt wird. Als Arbeitsgas wird ein Edelgas oder ein chemisch reaktives Gas eingesetzt, wie z.B. He, H₂ oder Ar. Das Arbeitsgas wird einem Volumen 17 der Plasmaimpulsquelle 14, das in Richtung auf das metallische Bauteil 18, das wenigstens abschnittsweise plasmaimpulsverfestigt werden soll, offen ist, über Ventile 19 zugeführt. Das Bauteil 18 ist je nach nach Anwendung in einer Entfernung im Bereich von 20 cm bis 1m von der Plasmaimpulsquelle 14 positioniert

Der erzeugte Lichtbogen gibt Wärme an das Arbeitsgas ab, das unter Bildung eines Plasmas ionisiert wird und die Plasmaimpulsquelle 14 an der Düse 29 detonationsartig in Form eines mit Pfeilen angedeuteten, gepulsten Plasmastrahls 20 mit extrem hoher Temperatur und Geschwindigkeit verläßt. Der Plasmastrahl 20 ist ein Gemisch aus Elektronen und positiv geladenen Atomkernen (Ionen) und weist etwa 50% kinetische und 50% thermische Energie auf: Beim Auftreffen und Eindringen des Plasmastrahls 20 auf bzw. in die Schicht 22 aus thermoplastischem Kunststoff, die auf den mittels Plasmaimpulsen zu verfestigenden Oberflächenabschnitt, z.B. 7,7', des Bauteils 18 aufgebracht ist, sublimiert der Kunststoff in einem Hochenergie-Kurzpuls und überträgt den Sublimations-Detonationsstoß in Form einer Stoßwelle in das Bauteil 18. Die Schicht 22 dient somit als energieübertragendes Medium zur Einkopplung des Sublimations-Detonationsstoßes in das Bauteil 18.

Unmittelbar nach dem detonationsartigen Austritt des Plasmagases 20 aus der Plasmaimpulsquelle 14 wird dieser über die Ventile 19 weiteres Arbeitsgas zugeführt, das wiederum über den Lichtbogen zwischen Anode und Kathode 14 bzw. 15 erwärmt wird und durch die Düse 21 detonationsartig in Richtung auf das Bauteil 18 austritt. Die Frequenz liegt dabei im Bereich von 1 - 10 Hz.

Der Lichtbogen der Plasmaimpulsquelle 14 wird nicht auf das Bauteil 18 übertragen, so dass dieses, obwohl je nach Anwendung nur mit geringem Abstand zur Düse 21 der Plasmaimpulsquelle 14 angeordnet, während des Verfahrens relativ kalt bleibt.

Das Verfahren und die Vorrichtung zum Plasmaimpulsverfestigen läßt sich auch auf andere metallische Bauteile von Wärme-, Kraft- oder Arbeitsmaschinen anwenden, bei denen sich von der Oberfläche bis in das Bauteil hinein erstreckende Bereiche durch Einbringung von bleibenden Druckspannungen verfestigt bzw. gehärtet werden sollen.

## Patentansprüche

1. Verfahren zum Plasmaimpulsverfestigen eines metallischen Bauteils mit den Schritten:
Bereitstellen eines metallischen Bauteils (1,8,18)
Beschichten eines Oberflächenabschnitts (7,7') des metallischen Bauteils (1,8,18) mit einem sublimierbaren Material (22),
Beaufschlagen des Oberflächenabschnitts (7,7') mit einem gepulsten Plasmastrahl (20) so, dass das Material sublimiert und dadurch eine Stoßwelle in das Bauteil (1,8,18) eingekoppelt wird zur Bildung von bleibenden Druckspannungen in einem sich von dem Oberflächenabschnitt (7,7') bis in das Bauteil (1,8,18) hinein erstreckenden Bereich.

2. Verfahren nach Anspruch 1, **dadurch gekennzeichnet, dass** ein Bauteil (1,8,18) aus einem Ti- oder Fe- oder Ni- oder Co-Basislegierung bereitgestellt wird.

3. Verfahren nach Anspruch 1 oder 2, **dadurch gekennzeichnet, dass** ein schwingungsbelastetes Bauteil (1,8,18) einer Gasturbine bereitgestellt wird.

4. Verfahren nach Anspruch 3, **dadurch gekennzeichnet, dass** eine Schaufel (1) oder ein Scheibe (9) eines Verdichters oder einer Turbine bereitgestellt wird.

5. Verfahren nach einem oder mehreren der vorhergehenden Ansprüche, **dadurch gekennzeichnet, dass** das sublimierbare Material organisch ist.

6. Verfahren nach einem oder mehreren der vorhergehenden Ansprüche, **dadurch gekennzeichnet, dass** das sublimierbare Material ein, vorzugsweise thermoplastischer, Kunststoff ist.

7. Verfahren nach einem oder mehreren der vorhergehenden Ansprüche, **dadurch gekennzeichnet, dass** der Oberflächenabschnitt (7,7') mit dem Plasmastrahl (20) flächig beaufschlagt wird.

8. Verfahren nach Anspruch 7, **dadurch gekennzeichnet, dass** der Plasmastrahl (20) in dem Oberflächenabschnitt (7,7') auf eine Fläche von etwa 10 cm² pro Plasmaimpuls einwirkt.

9. Verfahren nach einem oder mehreren der vorhergehenden Ansprüche, **dadurch gekennzeichnet, dass** die bleibenden Druckspannungen in einem sich von dem Oberflächenabschnitt (7,7') bis 2 mm ins Bauteil (1,8,18) hinein erstreckenden Bereich eingebracht werden.

10. Verfahren nach einem oder mehreren der vorhergehenden Ansprüche, **dadurch gekennzeichnet, dass** der gepulste Plasmastrahl (20) auf Basis einer gepulsten Hochstrom-Bogenentladung oder mit Hochfrequenzfeld induktiv oder kapazitiv erzeugt wird.

11. Verfahren nach einem oder mehreren der vorhergehenden Ansprüche, **dadurch gekennzeichnet, dass** der Oberflächenabschnitt (7,7') mit einem Materie aufweisenden, gepulsten Plasmastrahl (20) beaufschlagt wird.

12. Verfahren nach Anspruch 11, **dadurch gekennzeichnet, dass** der Oberflächenabschnitt (7,7') mit einem thermische und kinetische Energie aufweisenden, gepulsten Plasmastrahl (20) beaufschlagt wrid.

13. Verfahren nach einem oder mehreren der vorhergehenden Ansprüche, **dadurch gekennzeichnet, dass** der Oberflächenabschnitt (7,7') mit einem detonationsartig auftreffenden Plasmastrahl (20) beaufschlagt wird.

14. Verfahren nach einem oder mehreren der vorhergehenden Ansprüche, **dadurch gekennzeichnet, dass** der Oberflächenabschnitt (7,7') mit einem in einer Frequenz im Bereich von 1 - 10 Hz gepulsten Plasmastrahl (20) beaufschlagt wird.

15. Verfahren nach einem oder mehreren der vorhergehenden Ansprüche, **dadurch gekennzeichnet, dass** der Oberflächenabschnitt (7,7') mit einem Plasmastrahl (20) mit einer Geschwindigkeit von wenigstens etwa 150 km/s beaufschlagt wird.

16. Verfahren nach einem oder mehreren der vorhergehenden Ansprüche, **dadurch gekennzeichnet, dass** der Oberflächenabschnitt (7,7') im Vakuum mit dem Plasmastrahl (20) beaufschlagt wird.

17. Verfahren nach einem oder mehreren der vorhergehenden Ansprüche **gekennzeichnet durch**: Bereitstellen eines geschädigten, metallischen Bauteils (1,8,18) und Beaufschlagen des im Bereich der Schädigung liegenden Oberflächenabschnitts (7,7') mit dem Plasmastrahl (20).

18. Vorrichtung zum Plasmaimpulsverfestigen eines metallischen Bauteils, umfassend eine Plasmaimpulsquelle (14) mit einem Volumen (17) zur Aufnahme von Arbeitsgas und einer zu einem metallischen Substrat (18) gerichteten Düse (21), Halte- und Positioniereinrichtungen für die Plasmaimpulsquelle (14) und das Substrat (18), eine Einrichtung zum Beschichten des Substrats (18) mit einem sublimierbaren Material, eine Einrichtung (19) zur diskontinuierlichen Zufuhr von Arbeitsgas in das Volumen (17) und eine Einrichtung (15, 16) zur Einkopplung extrem hoher Leistung in das Arbeitsgas zur Erzeugung eines detonationsartig austretenden, gepulsten Plasmastrahls (20).

19. Vorrichtung nach Anspruch 18, **dadurch gekennzeichnet, dass** die Leistungseinkopplung in das Arbeitsgas mittels Hochstrom-Bogenentladung oder mittels Hochfrequenzfeld induktiv oder kapazitiv erfolgt.

20. Vorrichtung nach Anspruch 18 oder 19, **dadurch gekennzeichnet, dass** die Zufuhreinrichtung für das Arbeitsgas wenigstens ein Ventil (19) umfasst.

21. Vorrichtung nach einem oder mehreren der vorhergehenden Ansprüche 18 bis 20, **dadurch gekennzeichnet, dass** der gepulste Plasmastrahl (20) mit einer Frequenz von 1 - 10 Hz austritt.

22. Vorrichtung nach einem oder mehreren der vorhergehenden Ansprüche 18 bis 21, **dadurch gekennzeichnet, dass** die Düse (21) einen Durchmesser im Bereich von 50 - 500 mm aufweist.

23. Vorrichtung nach einem oder mehreren der vorhergehenden Ansprüche 18 bis 22, **gekennzeichnet durch** einen Wirkungsgrad im Bereich von 40 % bis 50 %.

## Claims

1. A process for the plasma impulse compacting of a metal component with the following steps:
- provision of a metal component (1, 8, 18),
- coating of a surface section (7, 7') of the metal component (1, 8, 18) with a sublimable material (22);
- application to the surface section (7, 7') of a pulsed plasma jet (20) such that the material is sublimed and a shock wave is thereby excited into the component (1, 8, 18) to form permanent compressive strains in an area extending from the surface section (7, 7') into the component (1, 8, 18).

2. A process in accordance with claim 1,
**characterised in that**
a component (1, 8, 18) made of a Ti or Fe or Ni or Co master alloy is provided.

3. A process in accordance with claim 1 or 2,
**characterised in that**
a component (1, 8, 18) of a gas turbine subject to vibrations is provided.

4. A process in accordance with claim 3,
**characterised in that**
a blade (1) or a disc (9) of a compressor or a turbine is provided.

5. A process in accordance with one or more of the preceding claims,
**characterised in that**
the sublimable material is organic.

6. A process in accordance with one or more of the preceding claims,
**characterised in that**
the sublimable material is a - preferably thermoplastic - plastic.

7. A process in accordance with one or more of the preceding claims,
**characterised in that**
the plasma jet (20) is applied to the surface of the surface section (7, 7').

8. A process in accordance with claim 7,
**characterised in that**
the plasma jet (20) affects a surface of some 10cm² of the surface section (7, 7') per plasma impulse.

9. A process in accordance with one or more of the preceding claims,
**characterised in that**
the permanent compressive strains are applied to an area extending from the surface section (7, 7') to 2 mm into the component (1, 8,18).

10. A process in accordance with one or more of the preceding claims,
**characterised in that**
the pulsed plasma jet (20) is generated on the basis of a pulsed high current arc discharge or with a high frequency field by inductance or capacitance.

11. A process in accordance with one or more of the preceding claims,
**characterised in that**
a pulsed plasma jet (20) containing a substance is applied to the surface section (7, 7').

12. A process in accordance with claim 11,
**characterised in that**
a pulsed plasma jet (20) containing thermal and kinetic energy is applied to the surface section (7, 7').

13. A process in accordance with one or more of the preceding claims,
**characterised in that**
a detonating pulsed plasma jet (20) is applied to the surface section (7, 7').

14. A process in accordance with one or more of the preceding claims,
**characterised in that**
a plasma jet (20) pulsed at a frequency in the range of 1 to 10 Hz is applied to the surface section (7, 7').

15. A process in accordance with one or more of the preceding claims,
**characterised in that**
a plasma jet (20) with a speed of at least some 150 km/s is applied to the surface section (7, 7').

16. A process in accordance with one or more of the preceding claims,
**characterised in that**
the plasma jet (20) is applied to the surface section (7, 7') in a vacuum.

17. A process in accordance with one or more of the preceding claims,
**characterised by**:
the provision of a damaged, metal component (1, 8, 18) and the application of the plasma jet (20) to the surface section (7, 7') located in the area of the damage.

18. A device for the plasma impulse compacting of a metal component comprising a plasma impulse source (14) with a volume (17) for receiving the operating gas and a nozzle (21) aligned towards a metal substrate (18), holding and positioning devices for the plasma impulse source (14) and the substrate (18), a device for coating the substrate (18) with a sublimable material, a device (!9) for the intermittent supply of operating gas into the volume (17) and a device (15, 16) for extremely high power injection into the operating gas in order to generate a detonating pulsed plasma jet (20) discharged.

19. A device in accordance with claim 18,
**characterised in that**
the injection of power into the operating gas takes place by means of a high current arc discharge or with a high frequency field by inductance or capacitance.

20. A device in accordance with claim 18 or 19,
**characterised in that** the feed device for the operating gas comprises at least one valve (19).

21. A device in accordance with one or more of claims 18 to 20,
**characterised in that**
the pulsed plasma jet (20) is discharged at a frequency of 1 to 10 Hz.

22. A device in accordance with one or more of claims 18 to 21,
**characterised in that**
the nozzle (21) has a diameter in the range of 50 to 500 mm.

23. A device in accordance with one or more of claims 18 to 22,
**characterised by**
an efficiency in the range of 40% to 50%.

## Revendications

1. Procédé de consolidation par impulsions de plasma d'un composant métallique comprenant les étapes suivantes : mise à disposition d'un composant métallique (1, 8, 18), pose sur une section de surface (7, 7') du composant métallique (1, 8, 18) d'un matériau pouvant être soumis à une sublimation (22), application d'un rayonnement de plasma pulsé (20) sur la section de surface (7, 7'), de sorte que le matériau est soumis à une sublimation et qu'ainsi une onde de choc est introduite dans le composant (1, 8, 18) afin de former des tensions de compression persistantes dans une zone s'étendant depuis la section de surface (7, 7') jusqu'à l'intérieur du composant (1, 8, 18).

2. Procédé selon la revendication 1, **caractérisé en ce qu'**un composant (1, 8, 18) est mis à disposition en un alliage à base de Ti ou de Fe ou de Ni ou de Co.

3. Procédé selon la revendication 1 ou 2, **caractérisé en ce qu'**un composant (1, 8, 18) d'une turbine à gaz soumis à des vibrations est mis à disposition.

4. Procédé selon la revendication 3, **caractérisé en ce qu'**une pale (1) ou un disque (9) d'un compresseur ou d'une turbine est mis à disposition.

5. Procédé selon l'une quelconque ou plusieurs des revendications précédentes, **caractérisé en ce que** le matériau pouvant être soumis à une sublimation est organique.

6. Procédé selon l'une quelconque ou plusieurs des revendications précédentes, **caractérisé en ce que** le matériau pouvant être soumis à une sublimation est un matériau synthétique, de préférence thermoplastique.

7. Procédé selon l'une quelconque ou plusieurs des revendications précédentes, **caractérisé en ce que** la section de surface (7, 7') est soumise à une action en surface à l'aide du rayonnement de plasma (20).

8. Procédé selon la revendication 7, **caractérisé en ce que** le rayonnement de plasma (20) agit sur la section de surface (7, 7') sur une superficie d'environ 10 cm² par impulsion de plasma.

9. Procédé selon l'une quelconque ou plusieurs des revendications précédentes, **caractérisé en ce que** les tensions de compression persistantes sont introduites dans une zone s'étendant depuis la section de surface (7, 7') jusqu'à 2 mm à l'intérieur du composant (1, 8, 18).

10. Procédé selon l'une quelconque ou plusieurs des revendications précédentes, **caractérisé en ce que** le rayonnement de plasma pulsé (20) est produit sur la base d'une décharge en arc pulsée à haute intensité ou de manière inductive ou capacitive avec un champ à haute fréquence.

11. Procédé selon l'une quelconque ou plusieurs des revendications précédentes, **caractérisé en ce que** la section de surface (7, 7') est soumise à un rayonnement de plasma pulsé (20) comprenant de la matière.

12. Procédé selon la revendication 11, **caractérisé en ce que** la section de surface (7, 7') est soumise à un rayonnement de plasma pulsé (20) comprenant de l'énergie thermique et cinétique.

13. Procédé selon l'une quelconque ou plusieurs des revendications précédentes, **caractérisé en ce que** la section de surface (7, 7') est soumise à un rayonnement de plasma (20) dont l'incidence se produit à la manière d'une détonation.

14. Procédé selon l'une quelconque ou plusieurs des revendications précédentes, **caractérisé en ce que** la section de surface (7, 7') est soumise à un rayonnement de plasma pulsé (20) avec une fréquence située dans la plage de 1-10 Hz.

15. Procédé selon l'une quelconque ou plusieurs des revendications précédentes, **caractérisé en ce que** la section de surface (7, 7') est soumise à un rayonnement de plasma (20) ayant une vitesse d'au moins environ 150 km/s.

16. Procédé selon l'une quelconque ou plusieurs des revendications précédentes, **caractérisé en ce que** la section de surface (7, 7') est soumise au rayonnement de plasma (20) en étant placée sous vide.

17. Procédé selon l'une quelconque ou plusieurs des revendications précédentes, **caractérisé par** la mise à disposition d'un composant métallique (1, 8, 18) détérioré et par l'application du rayonnement de plasma (20) sur la section de surface (7, 7') se trouvant dans la zone de la détérioration.

18. Dispositif de consolidation par impulsions de plasma d'un composant métallique comportant une source d'impulsions de plasma (14) avec un volume (17) pour recevoir du gaz de travail et un diffuseur (21) dirigé vers un substrat métallique (18), des dispositifs de maintien et de positionnement pour la source d'impulsions de plasma (14) et pour le substrat (18), un dispositif pour la pose sur le substrat (18) d'un matériau pouvant être soumis à une sublimation, un dispositif (19) d'amenée discontinue de gaz de travail dans le volume (17) et un dispositif (15, 16) pour l'introduction d'une puissance extrêmement élevée dans le gaz de travail afin de produire un rayonnement de plasma pulsé (20) dont la sortie se produit à la manière d'une détonation.

19. Dispositif selon la revendication 18, **caractérisé en ce que** l'introduction de la puissance dans le gaz de travail a lieu à l'aide d'une décharge en arc à haute intensité ou de manière inductive ou capacitive à l'aide d'un champ à haute fréquence.

20. Dispositif selon la revendication 18 ou 19, **caractérisé en ce que** le dispositif d'amenée pour le gaz de travail comprend au moins une vanne (19).

21. Dispositif selon l'une quelconque ou plusieurs des revendications précédentes 18 à 20, **caractérisé en ce que** la sortie du rayonnement de plasma pulsé (20) a lieu avec une fréquence de 1-10 Hz.

22. Dispositif selon l'une quelconque ou plusieurs des revendications précédentes 18 à 21, **caractérisé en ce que** la buse (21) a un diamètre situé dans la zone de 50-500 mm.

23. Dispositif selon l'une quelconque ou plusieurs des revendications précédentes 18 à 22, **caractérisé par** un rendement situé dans la zone de 40 % à 50 %.
